# EUROPEAN PATENT SPECIFICATION

(11) **EP 0 646 533 B1**
(45) Date of publication and mention of the grant of the patent: **01.12.1999**
(21) Application number: 94307199.3
(22) Date of filing: 30.09.1994
(51) Int. Cl.: B65D 90/62, B65D 90/66, B65G 65/30

(54) **A clamping mechanism**
Klemmvorrichtung
Dispositif de serrage

(30) Priority: 04.10.1993 GB 9320387
(43) Date of publication of application: 05.04.1995
(73) Proprietor: MATCON (R & D) LIMITED, Moreton-In-Marsh, Gloucestershire GL56 0HJ (GB)
(72) Inventor: MATCON (R & D) LIMITED, Moreton-In-Marsh, Gloucestershire GL56 0HJ (GB)
(74) Representative: Johnson, Terence Leslie

(56) References cited:
- CH-A- 635 800
- GB-A- 705 186
- GB-A- 2 187 438
- GB-A- 2 212 788

## Description

The invention relates to a clamping mechanism, particularly to such a mechanism as can be used for clamping a closure such as a cone seal in an aperture in say a container, hopper, silo, or intermediate bulk container (I.B.C.) which is used to store and/or transport, or mix, flowable material such as powder, granulated material or the like.

For various reasons such as the need to contain the material so that it does not cross-contaminate with materials or to ensure that it does not escape to the ambient atmosphere with possibly detrimental environmental consequences, it is necessary to try to ensure as good a seal of the cone seal as possible. However, it has generally proved difficult to ensure that the cone does not become dislodged or tilted, or leak, during transport or use, particularly as it has to be borne in mind that the I.B.C, can carry as much as two tonnes or more of material. In a blender operation, the container is rotated end over end and the cone can have an extremely high instantaneous component of lateral force on it when it is in a momentarily horizontal position, and this tends to dislodge the cone or at best cause it to leak. An example of an apparatus for containing flowable material is shown in GB-A-2 212 788.

It is accordingly an object of the invention to seek to obviate these disadvantages.

According to the invention there is provided a clamping mechanism for clamping together a closure and a body mounting same, comprising
a first member including a plurality of resiliently mounted clamping devices disposed to contact the closure and which can be moved from a release position to a clamping position to clamp the closure in the body, and
a second member adapted to contact the clamping devices of the first member to move them from the release position to the clamping position, and to maintain the clamping devices in the clamping position.

The first member may comprise a means to receive the body and a mount for the clamping devices, This provides for automatic operation.

The means may comprise an annular dish-like member mounting the clamping devices. This is a relatively simple construction.

The dish-like member may have a flared periphery for engagement by the body.

The clamping devices may be secured to an inner boundary surface of the dish-like member by resilient mounting means. This provides for a positive clamping action.

The resilient mounting means may each comprise a leaf spring. This is a relatively simple yet inexpensive construction.

The clamping devices may each comprise a resilient member, such as a rubber block. This again is a relatively inexpensive construction.

Each rubber block has an inclined surface for sealing engagement with an inclined surface of the body and closure. This again provides positive clamping action.

The inclined surfaces may each be inclined at about 45° to the horizontal. This is a particularly effective construction.

There may be three clamping devices on the dish-like member. This is an effective arrangement, particularly as the clamping devices may be equiangularly mounted on the dish-like member.

The second member may comprise an annular member of V-cross-section. This provides a simple yet effective over-centre part.

There may be a means to hold the first and second member in engagement in a first operative position.

There may be holding means which may comprise an inflatable ring located in the 'V'. This provides a positive seating for the inflatable ring.

There may be means to disengage the second member from engagement with the closure in the clamped operative position, particularly a suction means. This is an alternative construction for use where the inflatable ring is dispensed with, and where the suction means may comprise a vacuum means.

According to a second aspect of the invention there is provided a materials handling system, having a location station for receiving apparatus which can contain a flowable material, the location station comprising a mechanism as hereinbefore defined.

According to a third aspect of the invention there is provided apparatus including a closure comprising a valve system having a conical closure, and a mechanism as hereinbefore defined, for clamping the conical valve in an aperture of the system.

The apparatus may comprise an intermediate bulk container.

A clamping mechanism and a system incorporating same, embodying the invention, are hereinafter described, by way of example, with reference to the accompanying drawings.
Fig. 1 shows a schematic vertical cross-sectional view of a clamping mechanism according to the invention at a location station used in an I.B.C. container materials handling system;
Fig. 1A is a section of part of Fig. 1;
Fig. 2 is a view similar to Fig. 1 in a clamping operation; and
Fig. 3 is a view similar to Fig. 2 showing a fully clamped position.

Referring to the drawings, there is shown a clamping mechanism 1 for clamping together a closure 2 and a body 3 mounting same, comprising a first member 4 mounting a plurality of clamping devices 5 and a second member 6 having an over-centre part 7, the first and second members 4,6 being in engagement, the arrangement being such that when the body 3 engages the first member 4, the first and second members 4,6 move over-centre and the clamping devices 5 and the second member 6 engage the closure 2 whereby to clamp the closure 2 in the body 3.

The first member 4 comprises an annular dish-like member which in the embodiment is a rolled angle ring made of for example light steel. The outer (as viewed) periphery has a flared entry part 8, and the inner boundary surface 9 has secured to it as by nuts and bolts 10 the plurality of the clamping devices 5. In the embodiment there are three of the clamping devices 5 which are spaced equiangularly round the first member 4 and secured by the nuts and bolts 10. Each clamping device 5 comprises a resilient mounting means in the form of a leaf spring 11, suitably of light duty. The leaf spring 11 supports at an end remote from the first member 4 a resilient member in the form of a rubber block 12 which is secured to the leaf spring 11 by a suitable means such as a screw and block arrangement 13.

The rubber blocks 12 are each of generally triangular arrangement, the base being of shallow 'V'-shape to provide an inclined surface 14, the angle of inclination being substantially 45° to the horizontal.

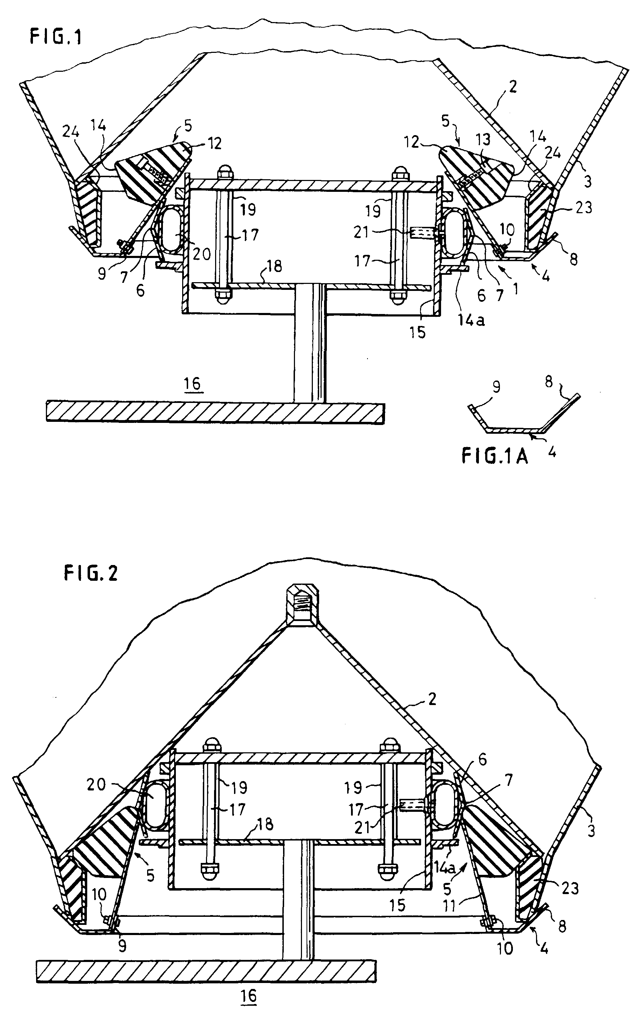

The second member 6 is in the form of an annular member of substantially 'V'-section, the apex of the 'V' forming the over-centre part 7. The ring 6 seats in the first operative position on a beam or support-flange 14a, which is itself part of a central, in use, location frame 15 which is again itself part of a location station 16. The frame 15 has mounting posts 17 which pass through a base plate 18 and include springs 19, the clearance through the base plate 18 being a full clearance to provide a degree of lateral movement as well as movement in a substantially vertical sense. In this way, the frame 15 provides for inherent centring in use. Seated in the apex of the 'V' of the second member is retaining or holding means 20 for the second member, which is in the form of an inflatable ring, which can be inflated and deflated through a line 21. The second member 6 is captive in the positions shown in Figs. 1 and 2, on the inflatable ring 20.

The clamping mechanism 1 is located on the central part of the location frame 15.

The mechanism is used to clamp the closure 2, in this case a conical cone valve, in an aperture 22 of a container such as an I.B.C., only part of the body 3 of which is shown. The body 3 of the I.B.C, defines the aperture 22, obturated and opened depending on the position of the conical cone valve 2. There is an annular seal 23 at the boundary of the aperture or opening 22 on which the cone valve seal 2 sits in the closed position, The seal 23 is resilient too, and it has an upper (as viewed) inclined surface 24 inclined at substantially 45°. The surface of the flange 14 and surface 24 are thus complementary.

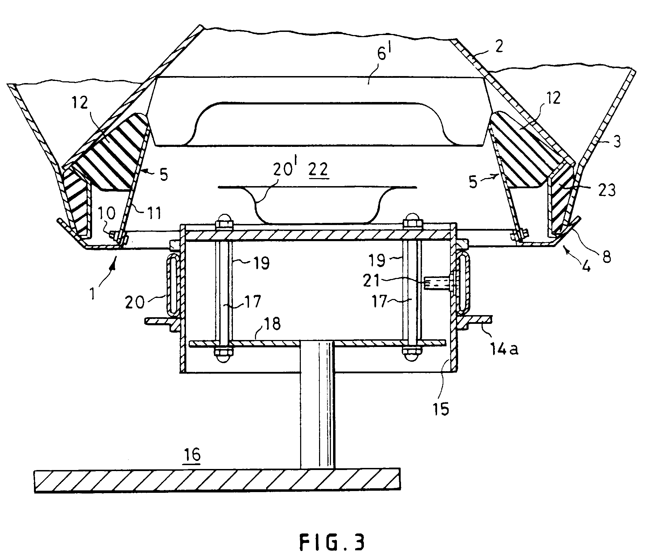

In use to clamp the cone seal 2, the I.B.C, is lowered onto the location frame 15, being guided by a guide frame (note shown). At a certain height, the boundary surface of the body 3 of the I.B.C, defining the aperture 22 engages the flared perimeter 8 of the first member 4, and is located centrally. The lower part of the seal 23 of the I.B.C, and the surface 8 of the outer perimeter surface of the first member 4 engage in sealing relation and trap and seal any material which may be at the boundary so that it cannot escape. As the I.B.C, is lowered further, the first member 4 is drawn downwardly by the lowering force. This movement can only be accommodated by the leaf springs 11 pivoting outwardly (clockwise in the drawings) so that they engage with their surface 14 the respective complementary surfaces 24 of the seal 23. At the same time the springs 11 of necessity pass downwardly over the second member 6 and pass over-centre over the over-centre apex 7 of the 'V' of the second member 6. This causes a positive sealing engagement of the rubber blocks 12 and seal 23. On further lowering of the I.B.C., the inner surface of the cone 2 engages the upper (as viewed) edge of the second member 6, (Fig.2). During all this movement, the inherent resilience provided by the rubber block 12, resilient cone seals 23, the springs 19, and the tensile strength of the leaf springs 11 ensure that any out of kilter arrangement between the I.B.C. its cone 2 and the location station 16 is automatically compensated for so that a true centring and mounting is achieved, (Fig.2). The ring 20 may have been inflated during the lowering of the I.B.C.. If so, it is now deflated, thereby releasing the second member 6, so the whole I.B.C, can be simply lifted off the location station 16 by any suitable means, (Fig. 3), the second member 6 simply being lifted off the flange 14a.

The cone valve 2 is now rigidly clamped in position, because the rubber blocks 12 are positively and solidly clamped between the second member 6 and the ring seal 23, thus creating a compressive force across the cone seal 2, through the second member 6, the rubber blocks 12 and the ring seal 23 to the body of the I.B.C. itself, thereby providing a totally tight, solid connection between the cone valve 2 and the mechanism 1, or transport cap, and this connection is virtually 100% fail-safe. The I.B.C. can then be transported, tumbled, moved, blended or handled however desired with no dislodgement of or leaking past the cone seal 2.

It will be understood that this whole clamping operation described above is automatically put into effect by the I.B.C. being lowered into the first member 4. This automatic action also creates a tension in the leaf springs 11 which thus clamps the cone valve 2 down into the aperture 22 (outlet) whilst also ensuring that the first ring seal 23 is forced up against the outlet. There may be a gasket (not shown) to seal any crevice between the cone and ring seal.

To disengage the mechanism 1, the operational sequence described is reversed. The bin 2 (I.B.C.) is thus lowered onto the location frame 15 so that the second member 6 seats on the flange 14a and the ring 20 is inflated (Fig. 1). The I.B.C. is then lifted, the leaf springs 11 pass up over the 'V'-over-centre part 7 of the second member 6, and the leaf springs 11 then pivot automatically anti-clockwise, and the body 3 lifts off the first member 4, ready for another clamping sequence of operations.

It will be understood that in some applications, for example blending, a complete system may be an integral part of the blender, the IBC entering and leaving the blender without a transport cap. This arrangement gives cost savings where there are a number of IBC's to be blended in one blender.

Also, in a modification shown schematically in Fig. 3, the second member may be an inverted dish-like member 6' which may be removed from the cone in the position in Fig. 3 by suitable means such as suction means, for example a vacuum suction grabber or gripper 20'.

In every embodiment described there can be a great cost saving in that the cone, usually made of 6mm stainless steel, can be reduced to a third or less of that gauge, and can even be made of plastic as there is no need to have a heavy cone the weight of which has hitherto been used to hold it down in the I.B.C.

## Claims

1. A clamping mechanism for clamping together a closure (2) and a body (3) mounting same, characterised by,
a first member (4) including a plurality of resiliently mounted clamping devices (5) disposed to contact the closure (2) and which can be moved from a release position to a clamping position to clamp the closure (2) in the body (3), and
a second member (6) adapted to contact the clamping devices (5) of the first member (4) to move them from the release position to the clamping position, and to maintain the clamping devices (5) in the clamping position.

2. A mechanism according to Claim 1, characterised by the first member (4) comprising a means comprising an annular dish-like member mounting the clamping devices to receive the body (3) and by a mount (10) for the clamping devices (5).

3. A mechanism according to Claim 2, characterised by the dish-like member having a flared periphery (8) for engagement by the body (3), and by the clamping devices (5) being secured to an inner boundary surface of the dish-like member by resilient mounting means (11).

4. A mechanism according to any preceding claim, characterised by the clamping devices (5) each comprising a resilient member.

5. A mechanism according to Claim 4, characterised by the resilient members (5) each comprising a rubber block having an inclined surface for sealing engagement with an inclined surface of the body and closure.

6. A mechanism according to any of Claims 2 to 5, characterised by there being three clamping devices (5) on the dish-like member (8, 9), by the second member (6) comprising an annular member of V-cross-section, and by there being a means (20) to hold the first and second members (4, 6) in engagement in a first operative position.

7. A mechanism according to Claim 6, characterised by the holding means (20) comprising an inflatable ring located in the 'V'.

8. A mechanism according to Claim 7, characterised by means (20') to disengage the second member from engagement with the closure in the clamped operative position.

9. A mechanism according to Claim 8, characterised by the means (20') comprising a vacuum means.

10. A mechanism according to any preceding claim, mounted in a first operative position in a frame.

11. A materials handling system, having a location station for receiving apparatus which can contain a flowable material, characterised by the location station (16) comprising a mechanism (1) according to any preceding claim.

12. Apparatus including a closure comprising a valve system having a conical closure, characterised by a mechanism (1) according to any preceding claim for clamping the conical valve (2) in an aperture of the system.

## Patentansprüche

1. Klemmechanismus zum Zusammenklemmen eines Verschlusses (2) und eines Körpers (3), an dem derselbe angebracht ist, gekennzeichnet durch
ein erstes Glied (4), das eine Mehrzahl federnd angebrachter Klemmvorrichtungen (5) umfaßt, die dazu angeordnet sind, den Verschluß (2) zu berühren, und die aus einer Freigabeposition in eine Klemmposition bewegt werden können, um den Verschluß (2) in dem Körper (3) zu klemmen, und
ein zweites Glied (6), das dazu angepaßt ist, die Klemmvorrichtungen (5) des ersten Glieds (4) zu berühren, um sie von der Freigabeposition in die Klemmposition zu bewegen und um die Klemmvorrichtungen (5) in der Klemmposition zu halten.

2. Mechanismus nach Anspruch 1, dadurch gekennzeichnet, daß das erste Glied (4) ein Mittel umfaßt, das ein ringförmiges schalenartiges Glied umfaßt, an dem die Klemmvorrichtungen angebracht sind, um den Körper (3) aufzunehmen, und durch eine Halterung (10) für die Klemmvorrichtungen (5).

3. Mechanismus nach Anspruch 2, dadurch gekennzeichnet, daß das schalenartige Glied eine konisch erweiterte Peripherie (8) zur Ineingriffnahme durch den Körper (3) aufweist, und dadurch, daß die Klemmvorrichtungen (5) mittels federnder Anbringungsmittel (11) an einer inneren Randoberfläche des schalenartigen Glieds befestigt sind.

4. Mechanismus nach einem der vorhergehenden Ansprüche, dadurch gekennzeichnet, daß die Klemmvorrichtungen (5) jeweils ein federndes Glied umfassen.

5. Mechanismus nach Anspruch 4, dadurch gekennzeichnet, daß die federnden Glieder (5) jeweils einen Gummiblock umfassen, der zum dichtenden Eingriff mit einer geneigten Oberfläche des Körpers und des Verschlusses eine geneigte Oberfläche aufweist.

6. Mechanismus nach einem der Ansprüche 2 bis 5, dadurch gekennzeichnet, daß an dem schalenartigen Glied (8, 9) drei Klemmvorrichtungen (5) vorhanden sind, dadurch, daß das zweite Glied (6) ein ringförmiges Glied mit V-förmigem Querschnitt umfaßt, und dadurch, daß ein Mittel (20) dazu vorhanden ist, das erste und das zweite Glied (4, 6) im Eingriff in einer ersten Betriebsposition zu halten.

7. Mechanismus nach Anspruch 6, dadurch gekennzeichnet, daß das Haltemittel (20) einen aufblasbaren Ring umfaßt, der sich in dem 'V' befindet.

8. Mechanismus nach Anspruch 7, gekennzeichnet durch ein Mittel (20') dazu, in der geklemmten Betriebsposition das zweite Glied aus dem Eingriff mit dem Verschluß zu nehmen.

9. Mechanismus nach Anspruch 8, dadurch gekennzeichnet, daß das Mittel (20') ein Vakuummittel umfaßt.

10. Mechanismus nach einem der vorhergehenden Ansprüche, der in einer ersten Betriebsposition in einem Rahmen angebracht ist.

11. Materialenhandhabungssystem, das eine Positionierungsstation zur Aufnahme einer Vorrichtung aufweist, die ein fließfähiges Material enthalten kann, dadurch gekennzeichnet, daß die Positionierungsstation (16) einen Mechanismus (1) nach einem der vorhergehenden Ansprüche umfaßt.

12. Vorrichtung, die einen Verschluß umfaßt, der ein Ventilsystem mit einem konischen Verschluß umfaßt, gekennzeichnet durch einen Mechanismus (1) nach einem der vorhergehenden Ansprüche zum Klemmen des konischen Ventils (2) in einer Öffnung des Systems.

## Revendications

1. Mécanisme de serrage pour serrer l'un à l'autre une enceinte (2) et un corps (3) monté sur cette dernière, caractérisé par
un premier élément (4) englobant plusieurs dispositifs de serrage (5) montés de manière résiliente, disposés pour entrer en contact avec l'enceinte (2) et qui peuvent se déplacer entre une position de libération et une position de serrage pour serrer l'enceinte (2) dans le corps (3), et
un deuxième élément (6) conçu pour entrer en contact avec les dispositifs de serrage (5) du premier élément (4) pour les faire passer de la position de libération à la position de serrage et pour maintenir les dispositifs de serrage (5) dans la position de serrage.

2. Mécanisme selon la revendication 1, caractérisé par le fait que le premier élément (4) comprend un moyen comprenant un élément annulaire en forme de cuvette sur lequel sont montés les dispositifs de serrage pour recevoir le corps (3), et par un support (10) pour les dispositifs de serrage (5).

3. Mécanisme selon la revendication 2, caractérisé par le fait que l'élément en forme de cuvette possède une périphérie évasée (8) à des fins de mise en contact avec le corps (3) et par le fait que les dispositifs de serrage (5) sont fixés à une surface limite interne de l'élément en forme de cuvette via un moyen de montage résilient (11).

4. Mécanisme selon l'une quelconque des revendications précédentes, caractérisé par le fait que les dispositifs de serrage (5) comprennent chacun un élément résilient.

5. Mécanisme selon la revendication 4, caractérisé par le fait que les éléments résilients (5) comprennent chacun un bloc en caoutchouc possédant une surface inclinée à des fins de mise en contact d'étanchéité avec une surface inclinée du corps et de l'enceinte.

6. Mécanisme selon l'une quelconque des revendications 2 à 5, caractérisé par le fait que trois dispositifs de serrage (5) sont montés sur l'élément (8, 9) en forme de cuvette, par le fait que le deuxième élément (6) comprend un élément annulaire de section transversale en V et par le fait qu'un moyen (20) existe pour maintenir les premier et deuxième éléments (4, 6) en contact dans une première position de travail.

7. Mécanisme selon la revendication 6, caractérisé par le fait que le moyen de maintien (20) comprend un anneau gonflable placé dans le "V".

8. Mécanisme selon la revendication 7, caractérisé par un moyen (20') destiné à supprimer la mise en contact du deuxième élément avec l'enceinte dans la position de travail à l'état serré.

9. Mécanisme selon la revendication 8, caractérisé par le fait que le moyen (20') comprend un moyen de vide.

10. Mécanisme selon l'une quelconque des revendications précédentes, monté, dans une première position de travail, dans un cadre.

11. Système de manipulation de matières possédant un poste de positionnement pour recevoir un appareil qui peut contenir une matière apte à s'écouler, caractérisé par le fait que le poste de positionnement (16) comprend un mécanisme (1) selon l'une quelconque des revendications précédentes.

12. Appareil englobant une enceinte comprenant un système de soupape possédant une enceinte conique, caractérisé par un mécanisme (1) selon l'une quelconque des revendications précédentes pour serrer la soupape conique (2) dans un orifice du système.
